# EUROPÄISCHE PATENTSCHRIFT

(11) **EP 2 158 998 B1**
(45) Veröffentlichungstag und Bekanntmachung des Hinweises auf die Patenterteilung: **01.12.2010**
(21) Anmeldenummer: 09008830.3
(22) Anmeldetag: 07.07.2009
(51) Int. Cl.: B23Q 5/04, B23B 29/24

(54) **Werkzeugrevolver**
Tool revolver
Tourelle revolver

(30) Priorität: 30.08.2008 DE 102008045181
(43) Veröffentlichungstag der Anmeldung: 03.03.2010
(73) Patentinhaber: Sauter Feinmechanik GmbH, D-72555 Metzingen (DE)
(72) Erfinder: Sahm, Detlef Dieter, Dr., 73669 Lichtenwald (DE); Beck, Matthias, 72555 Metzingen (DE)
(74) Vertreter: Bartels & Partner

(56) Entgegenhaltungen:
- EP-A- 1 287 931
- EP-A- 1 543 917
- DE-C1- 3 929 803
- JP-A- 60 034 239

## Beschreibung

Die Erfindung betrifft einen Werkzeugrevolver, mit einem an einer Werkzeugmaschine anzubringenden oder angebrachten Grundkörper, der eine Revolverachse definiert, um die drehbar am Grundkörper eine Werkzeugscheibe gelagert ist, die mehrere an ihrem Umfang verteilte Werkzeugstationen aufweist, die durch Drehen der Werkzeugscheibe jeweils in mindestens eine Arbeitsposition einstellbar sind, in der ein im Inneren der Werkzeugscheibe befindlicher Werkzeugantrieb mit seinem um eine zur Revolverachse radiale Drehachse drehbaren, abtriebsseitigen Getriebeteil mit einem werkzeugseitigen Kupplungsteil für den Antrieb mindestens eines Werkzeuges in Kupplungseingriff kommt, das sich an der auf die Arbeitsposition ausgerichteten Werkzeugstation befindet, wobei das abtriebsseitige Getriebeteil in der Werkzeugscheibe um die Revolverachse schwenkbar angeordnet ist.

Durch die DE 689 08 208 T2 oder die DE 10 2005 033 890 A1 sind Werkzeugrevolver bekannt, die für den Einsatz bei Werkzeugmaschinen, wie Drehmaschinen, Bearbeitungszentren und ähnlichen Vorrichtungen, vorgesehen sind. Bei der Benutzung solcher Werkzeugrevolver handelt es sich bei den an den Werkzeugstationen der Werkzeugscheibe befindlichen Werkzeugen, die zum Einsatz kommen sollen, sowohl um stillstehende Werkzeuge, wie Drehmeisel und dergleichen, als auch um sogenannte Rotationswerkzeuge für Bearbeitungsvorgänge wie Bohren, Fräsen und dergleichen. In einem derartigen Fall erfolgt der Drehantrieb für das betreffende Rotationswerkzeug, das sich an der in der Arbeitsposition befindlichen Werkzeugstation befindet, über den internen Werkzeugantrieb, mit dessen abtriebsseitigem Getriebeteil ein betreffendes, werkzeugseitiges Kupplungsteil in Kupplungseingriff kommen kann, wenn sich die Werkzeugstation, an der das Rotationswerkzeug angebracht ist, in einer definierten Arbeitsposition befindet.

Die Festlegung der Winkelstellung dieser definierten Arbeitsposition relativ zum Grundkörper ist in manchen Fällen nachteilig. Während bei Drehbearbeitungen eine festgelegte Winkelstellung der Arbeitsposition zweckmäßig ist, weil dabei stets auf Mitte der Werkstückachse eine spanende Bearbeitung vorgenommen wird, ist es vielfach wünschenswert, auch außerhalb der festgelegten Winkelposition Bohr- oder Fräsbearbeitungen vornehmen zu können, wobei die Vorschub- oder Bearbeitungsrichtung nicht rechtwinklig zur Werkstückachse erfolgt.

Durch die DE 39 29 803 C1 ist ein gattungsgemäßer Werkzeugrevolver, insbesondere für Drehautomaten, mit Werkzeughaltern für drehantreibbare Werkzeuge bekannt. Bei der bekannten Lösung ist ein Revolverkopf an einem Revolverkörper um eine Revolverachse drehbar gelagert und in mehreren Arbeitsstellungen verriegelbar. Am Revolverkopf ist mindestens ein Werkzeughalter auswechselbar befestigt, der eine drehbare Einspannvorrichtung für ein Werkzeug sowie eine Spindel zum Antreiben der Einspannvorrichtung mit einem innerhalb des Revolverkopfes angeordneten Zahnrad aufweist. Im Revolverkörper ist eine zur Revolverachse parallele Antriebswelle axial verschiebbar gelagert und mit einer hydraulisch erzeugten Axialkraft belastbar. Die Antriebswelle trägt ein Zahnrad, von dem in einer Arbeitsstellung des Revolverkopfes die Spindel antreibbar ist. Die Antriebswelle ist mit einer geringen axialen Kraft im Sinne des Einrückens der beiden Zahnräder vorgespannt und erst nach dem Einrücken der beiden Zahnräder mit hydraulisch erzeugter Kraft in axialer Richtung feststellbar.

Die DE 28 49 167 B2 zeigt eine zu der vorstehend genannten Lösung vergleichbare gattungsgemäße Werkzeugrevolver-Lösung. Eine Schaltkupplung innerhalb der Werkzeugscheibe ist bei den bekannten, gattungsgemäßen Lösungen nicht vorgesehen.

Ausgehend von diesem Stand der Technik stellt sich die Erfindung die Aufgabe, einen Werkzeugrevolver zur Verfügung zu stellen, mit dem Bearbeitungsvorgänge mittels Rotationswerkzeugen nicht nur bei Einstellung der Werkzeugscheibe auf eine definierte Arbeitsposition vorgenommen werden können, sondern auch in solchen Fällen, wo sich die Werkzeugscheibe in einer gewünschten beliebigen Drehposition befindet.

Erfindungsgemäß ist diese Aufgabe durch einen Werkzeugrevolver gelöst, der die Merkmale des Patentanspruches 1 in seiner Gesamtheit aufweist.

Nach dem kennzeichnenden Teil des Anspruches 1 besteht eine wesentliche Besonderheit der Erfindung darin, dass in der Werkzeugscheibe eine Schaltkupplung vorhanden ist, die es ermöglicht, das abtriebsseitige Getriebeteil für eine Schwenkbewegung um die Revolverachse mit der Werkzeugsscheibe zu kuppeln. Somit kann das abtriebsseitige Getriebeteil bei entsprechender Schaltstellung der Schaltkupplung, wenn die Werkzeugscheibe in eine gewünschte Drehposition gedreht wird, von der Werkzeugscheibe mitgenommen werden, wodurch sich die Möglichkeit eröffnet, in gewünschten, unterschiedlichen Winkelpositionen mit Rotationswerkzeugen zu arbeiten. Andererseits kann bei betreffender Schaltstellung der Schaltkupplung das abtriebsseitige Getriebeteil von der Werkzeugscheibe entkuppelt werden, wodurch sich die weitere Möglichkeit eröffnet, ein anderes Werkzeug in die Arbeitsposition zu bringen. Sofern das abtriebsseitige Getriebeteil, mit dem ein anzutreibendes Rotationswerkzeug mit seinem werkzeugseitigen Kupplungsteil in Eingriff kommt, in der Werkzeugscheibe um die Revolverachse schwenkbar angeordnet ist, kann es in verschiedenen Winkelstellungen den Antrieb für das jeweilige Rotationswerkzeug bilden.

Bei bevorzugten Ausführungsbeispielen weist die Schaltkupplung als bewegbares Kupplungsteil eine Buchse auf, die eine Drehlagerung des abtriebsseitigen Getriebeteils für dessen Drehung um die radiale Drehachse bildet, zwischen erster Schaltstellung und zweiter Schaltstellung in der Werkzeugscheibe radial verschiebbar angeordnet ist und in der ersten Schaltstellung eine radial vorgeschobene Stellung einnimmt, in der sie mit radial endseitigen Mitnehmern mit Mitnehmerflächen der Werkzeugscheibe in Eingriff ist. Die Doppelfunktion der Buchse sowohl für die Lagerung des abtriebsseitigen Getriebeteiles des Werkzeugantriebes als auch als bewegbares Kupplungsteil der Schaltkupplung führt zu einer äußerst kompakten Bauweise, bei der Werkzeugantrieb und Schaltkupplung ohne Schwierigkeiten innerhalb des in der Werkzeugscheibe zur Verfügung stehenden Baurahmes unterbringbar sind.

Bei besonders vorteilhaften Ausführungsbeispielen, die sich durch eine besonders einfache und kompakte Bauweise auszeichnen, ist das abtriebsseitige Getriebeteil als weiterer Bestandteil der Schaltkupplung zusammen mit der Buchse in der Werkzeugscheibe derart radial verschiebbar, dass es bei der zweiten Schaltstellung eine radial nach innen geschobene Position einnimmt, bei der es am Grundkörper gegen eine Schwenkbewegung um die Revolverachse gesichert, jedoch um seine radiale Drehachse drehbar ist. In Zusammenwirkung mit dem Grundkörper ist dadurch eine definierte Ausgangs-Winkelposition für Bearbeitungsvorgänge sowohl mit stillstehenden Werkzeugen als auch mit Rotationswerkzeugen festgelegt, wenn sich die Schaltkupplung in der zweiten Schaltstellung befindet. Einstell-Drehbewegungen der Werkzeugscheibe können hierbei vorgenommen werden, ohne dass das abtriebsseitige Getriebeteil des Werkzeugantriebes aus dieser definierten Ausgangsposition mitgenommen würde. Wenn andererseits die Schaltkupplung in die erste Schaltstellung überführt wird, läßt sich das abtriebsseitige Getriebeteil wiederum mit der Drehbewegung der Werkzeugscheibe in eine gewünschte Position mitnehmen, in der ein Rotationswerkzeug betrieben werden soll.

Der Werkzeugantrieb kann in der Art eines Winkeltriebes mit einem antriebsseitigen, um die Revolverachse drehbaren Kronenrad mit in einer Radialebene liegender Verzahnung gestaltet sein, deren radiale Erstreckung so gewählt ist, dass die Verzahnung des abtriebsseitigen Getriebeteiles bei dessen radialen Verschiebungen zwischen erster und zweiter Schaltstellung bleibend mit der Verzahnung des Kronenrades in Zahneingriff ist. Der Werkzeugantrieb kann daher, unabhängig davon, in welcher Schaltstellung sich die Schaltkupplung befindet, in Tätigkeit sein.

Die Anordnung ist vorzugsweise so getroffen, dass der Grundkörper eine zentrale, die Revolverachse definierende Trägersäule aufweist, um die die Werkzeugscheibe drehbar gelagert ist, wobei innerhalb derselben ein Führungskörper vorgesehen ist, an dem die bewegbaren Komponenten der Schaltkupplung, wie Buchse und darin drehbar gelagertes, abtriebsseitiges Getriebeteil, sowohl für die Radialbewegungen zwischen den Schaltstellungen als auch für Schwenkbewegungen um die Revolverachse geführt sind.

Besonders wenig Bauraum wird hierbei benötigt, wenn die Schaltkupplung mit Hilfe eines Druckmediums, vorzugsweise mittels hydraulischer Betätigung, in die Schaltstellungen überführbar ist.

Hierbei kann die Anordnung so getroffen sein, dass die Buchse außenumfangsseitig einen vorstehenden Ringkörper aufweist, der als bewegbarer Ringkolben Druckräume voneinander trennt, die am Führungskörper in dem Führungsabschnitt ausgebildet sind, an dem die Buchse für die Verschiebebewegungen zwischen den Schaltstellungen geführt ist, wobei die Druckräume wahlweise mit dem Druckmedium versorgbar sind, um die Schaltkupplung durch Bewegen der Buchse in die Schaltstellungen zu überführen.

Vorzugsweise ist das antriebsseitige Kronenrad des Werkzeugantriebes auf einer die Trägersäule umgebenden Hohlwelle angebracht, wobei die Anordnung vorzugsweise so getroffen ist, dass an dem Endbereich der Hohlwelle, der demjenigen Ende der Trägersäule benachbart ist, das von der Werkzeugscheibe entfernt ist, ein auf der Hohlwelle sitzendes Zahnritzel mit einem Abtriebszahnrad eines Antriebsmotors in Getriebeverbindung ist.

Als Antrieb für die Drehbewegungen der Werkzeugscheibe um die Revolverachse kann ein zu dieser koaxial angeordneter Torque-Motor vorgesehen sein, dessen Läufer mit der Werkzeugscheibe für deren Direktantrieb verbunden ist.

Um die Werkzeugscheibe in gewünschter Einstellposition schlupffrei festzulegen, ist vorzugsweise zwischen dem Grundkörper und der Werkzeugscheibe eine Klemmung vorhanden, wobei vorzugsweise die Betätigung hydraulisch erfolgt.

Nachstehend ist die Erfindung anhand eines in der Zeichnung dargestellten Ausführungsbeispieles im Einzelnen erläutert. Es zeigen:
- Fig. 1 einen schematisch leicht vereinfacht dargestellten Längsschnitt eines Werkzeugrevolvers gemäß einem Ausführungsbeispiel der Erfindung und
- Fig. 2 und 3 gegenüber Fig. 1 vergrößert, schematisch vereinfacht und abgebrochen gezeichnete Darstellungen mit Sicht auf das Innere lediglich der Werkzeugscheibe des Ausführungsbeispieles, wobei in Fig. 2 eine Schaltkupplung in einer ersten Schaltstellung und in Fig. 3 die Schaltkupplung in der zweiten Schaltstellung dargestellt sind.

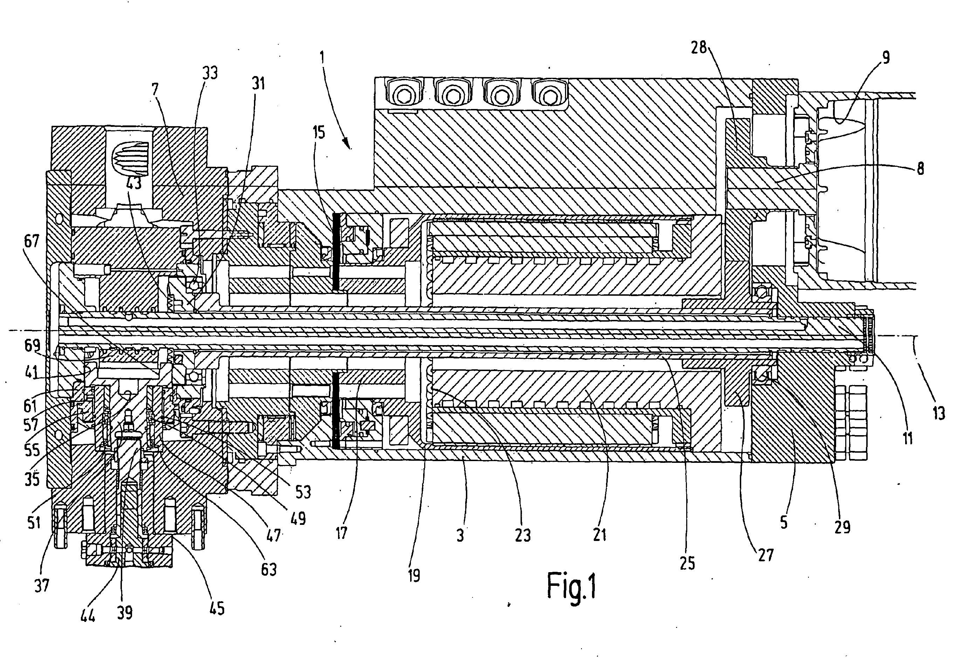

Das in der Zeichnung dargestellte Ausführungsbeispiel des Werkzeugrevolvers weist einen Grundkörper 1 mit einem Revolvergehäuse 3 auf, das an einem Ende mit einem Gehäusedeckel 5 abgeschlossen ist und an dessen anderem Ende sich eine Werkzeugscheibe 7 anschließt. Am Gehäusedeckel 5 ist ein elektrischer Antriebsmotor 9 angeflanscht, von dem in Fig. 1 lediglich ein sich an seine Ausgangswelle 8 anschließender Teilabschnitt dargestellt ist. Am Gehäusedeckel 5 ist außerdem eine als Teil des Grundkörpers 1 bildende Trägersäule 11 mit ihrem einen Ende angebracht, deren anderes Ende sich bis ins Innere der Werkzeugscheibe 7 erstreckt. Die Trägersäule 11 definiert die Revolverachse 13, um die die Werkzeugscheibe 7 drehbar am Grundkörper 1 gelagert ist. Um die Werkzeugscheibe 7 in ausgewählten Drehstellungen schlupffrei relativ zum Grundkörper 1 festzulegen, ist zwischen angrenzenden Planflächen des Grundkörpers 1 und der Werkzeugscheibe 7, genauer gesagt, am Revolvergehäuse 3 und an der Werkzeugscheibe 7, eine lediglich in Fig. 1 schematisch vereinfacht angedeutete Klemmung 15 eingebaut, die hydraulisch in bei derartigen Einrichtungen üblicher Weise spannbar ist, was in Fig. 1 nicht näher dargestellt ist. Für die Einstellung der Winkelpositionen der Werkzeugscheibe 7 um die Revolverachse 13 ist ein die Trägersäule 11 konzentrisch umgebender Torque-Motor 21 vorgesehen, dessen Außenläufer 19 mit einem Rohrkörper 17 der Werkzeugscheibe 7, der sich ins Innere des Revolvergehäuses 3 erstreckt, verbunden ist. Der innenliegende Stator des Motors 21, dessen Statorwicklung mit 23 bezeichnet ist, ist mit dem Revolvergehäuse 3 auf Drehung verbunden.

Als Drehantrieb für einen innerhalb der Werkzeugscheibe 7 befindlichen Werkzeugantrieb ist eine die Trägersäule 11 umgebende Hohlwelle 25 vorgesehen, auf deren dem Gehäusedeckel 5 benachbarten Ende ein Antriebsritzel 27 sitzt, welches, und damit die Hohlwelle 25 selbst, über ein Wälzlager 29 am Gehäusedeckel 5 gelagert ist. Das Ritzel 27 ist mit einem Zahnritzel 28 auf der Ausgangswelle 8 des Motors 9 in Zahneingriff. Am anderen Ende der Hohlwelle 25 befindet sich ein Kronenrad 31 welches, und damit die Hohlwelle 25 selbst, über ein weiteres Wälzlager 33 an dem Führungskörper 61 gelagert ist.

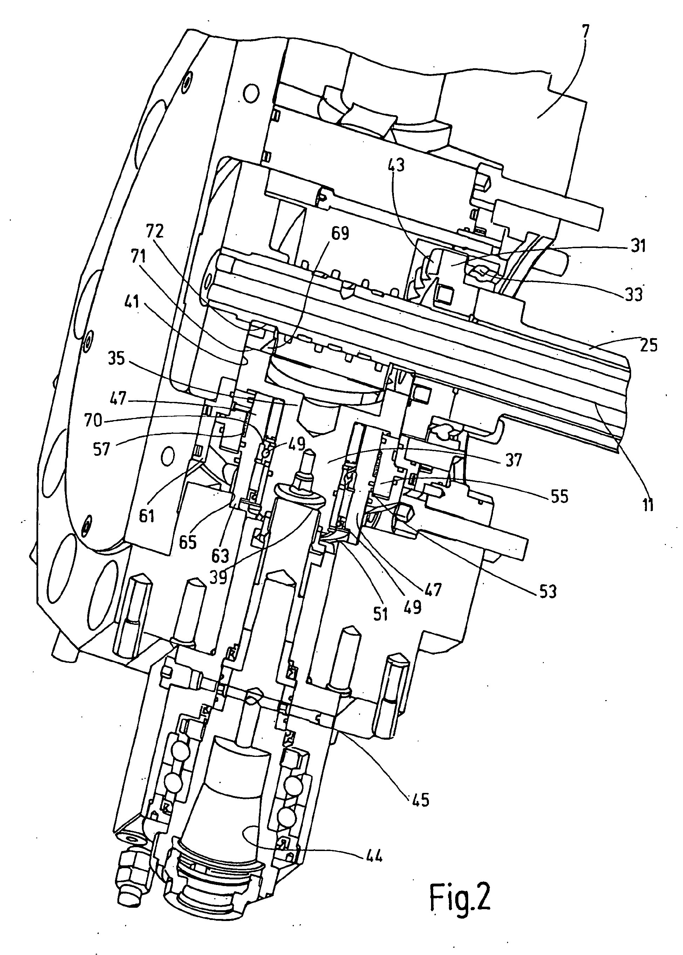

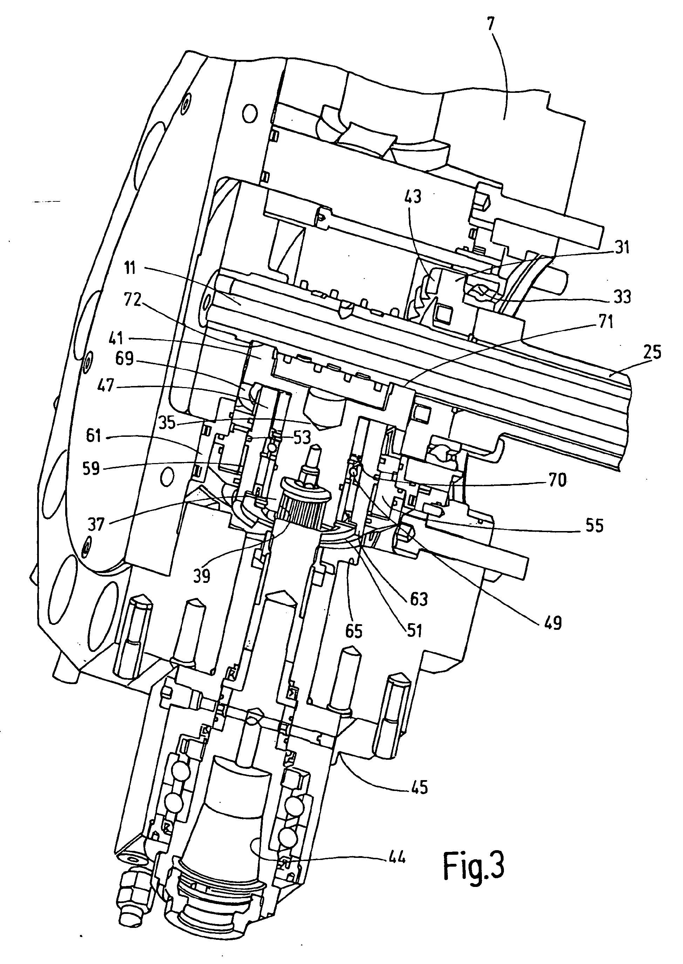

Das Kronenrad 31 bildet den antriebsseitigen Teil des im Inneren der Werkzeugscheibe 7 befindlichen Werkzeugantriebes. Dessen Einzelheiten sowie die Einzelheiten einer Schaltkupplung, die sich im Inneren der Werkzeugscheibe befindet, sind aus den Fig. 2 und 3 deutlicher entnehmbar. Als mit dem Kronenrad 31 zusammenwirkendes abtriebsseitiges Getriebeteil ist ein Rotationskörper 35 vorgesehen mit einem zu seiner Drehachse konzentrischen Schaft 37, der ein Drehkupplungsteil 39 bildet, mit dem ein werkzeugseitiges Kupplungsteil für den Drehantrieb eines nicht dargestellten Rotationswerkzeuges, das sich an einer Werkzeugstation 45 in einer Werkzeugaufnahme 44 befindet. An seinem dem Schaftteil 37 entgegengesetzten Ende bildet der Rotationskörper 35 einen die Drehachse konzentrisch umgebenden außenliegenden Zahnkranz 41, der mit der Verzahnung 43 des Kronenrades 31 in Eingriff ist. Die Verzahnung 43 am Tellerrad 31 besitzt in einer Radialebene eine Erstreckung, die so gewählt ist, dass der Zahnkranz 41 mit der Verzahnung 43 bleibend in Eingriff ist, ungeachtet dessen, ob der Rotationskörper 35 durch radiale Verschiebebewegung in eine der ersten Schaltstellung oder eine der zweiten Schaltstellung der Schaltkupplung entsprechende Stellung radial eingestellt ist. Die Fig. 1 und 2 zeigen jeweils den Rotationskörper 35, d. h. das abtriebsseitige Getriebeteil des Werkzeugantriebes, in der der ersten Schaltstellung der Schaltkupplung entsprechenden Radialposition, während Fig. 3 den Rotationskörper 35 in der der zweiten Schaltstellung der Schaltkupplung entsprechenden radialen Einstellposition zeigt. Bei beiden Positionen ist der Zahnkranz 41 in Zahneingriff mit der Verzahnung 43 des Kronenrades 31.

Die Schaltkupplung selbst weist als zwischen erster und zweiter Schaltstellung radial bewegbares Kupplungsteil eine Buchse 47 auf, die den Schaft 37 des Rotationskörpers 35 konzentrisch umgibt und über Wälzlager 49 eine Drehlagerung des das abtriebsseitige Getriebeteil bildenden Rotationskörpers 35 bildet. Die Buchse 47 weist an dem von der Revolverachse 13 entfernt gelegenen Wälzlager 49 einen Wellensicherungsring 51 auf, über den die Buchse 47 bei einer radial nach außen gerichteten Verschiebebewegung in die erste Schaltstellung den Rotationskörper 35 mitnimmt. Bei Verschiebebewegungen der Buchse 47 radial einwärts in die zweite Schaltstellung der Schaltkupplung nimmt die Buchse 47 den Rotationskörper 35 durch Anlage des Lagers 49 an der Stufenfläche 70 der Buchse 47 mit.

Beim hier gezeigten Ausführungsbeispiel erfolgt die Betätigung der Schaltkupplung hydraulisch. Zu diesem Zweck weist die Buchse 47 außenumfangsseitig einen vorstehenden Ringkörper 53 auf, der als Ringkolben fungiert, der in einem ringförmigen Führungsabschnitt 55 geführt ist und darin ein Trennelement zwischen einem ersten Druckraum 57 (Fig. 1 und 2) und einem zweiten Druckraum 59 (Fig. 3) bildet. Der Führungsabschnitt 55 ist für die Schwenkbewegungen um die Revolverachse 13 an einem Führungskörper 61 in der Werkzeugscheibe 7 geführt.

Die Fig. 1 und 2 zeigen die Schaltkupplung in der ersten Schaltstellung, bei der der Druckraum 57 mit einem hydraulischen Druckmedium versorgt ist, so dass sich die Buchse 47 radial nach außen in eine Position bewegt hat, bei der endseitige Mitnehmer 63 die Buchse 47 an Mitnehmerflächen 65 der Werkzeugscheibe 7 verriegeln. Bei dieser Schaltstellung ist der als abtriebsseitiges Getriebeteil dienende Rotationskörper 35 mit seinem Zahnkranz 41 von der Trägersäule 11 radial wegbewegt, verbleibt jedoch mit seinem Zahnkranz 41 mit der Verzahnung 43 des Kronenrades 31 in Zahneingriff, so dass ein in der Werkzeugaufnahme 44 aufgenommenes Rotationswerkzeug antreibbar ist. Ein Bearbeitungsvorgang kann daher mit dem betreffenden Rotationswerkzeug durchgeführt werden, ungeachtet dessen, in welche Drehposition die Werkzeugstation 45, an der sich die Werkzeugaufnahme 44 des betreffenden Rotationswerkzeuges befindet, durch Drehen der Werkzeugscheibe 7 eingestellt ist.

Die Fig. 3 zeigt andererseits die Positionen, die der zweiten Schaltstellung der Schaltkupplung entsprechen, wobei nunmehr der andere Druckraum 59 mit hydraulischer Druckflüssigkeit versorgt ist, so dass sich der als Ringkolben dienende Ringkörper 53 der Buchse 47 und damit diese selbst radial nach innen bewegt. Bei dieser Position sind die Mitnehmer 63 der Buchse 47 von den Mitnehmerflächen 65 der Werkzeugscheibe 7 zurückgezogen. Schwenkbewegungen derselben um die Revolverachse 13 führen daher zu keiner Mitnahme des Rotationskörpers 35, der das abtriebsseitige Getriebeteil des Werkzeugantriebes bildet. Der Werkzeugantrieb verbleibt daher ungeachtet der Einstell-Drehbewegungen der Werkzeugscheibe 7 in gegebener Position.

Damit der Führungskörper 61 bei der Einstell-Drehbewegung der Werkzeugscheibe 7 in seiner Winkellage bezüglich der Revolverachse 13 sicher fixiert ist, muss der Rotationskörper 35 in der nach innen geschobenen Position, d. h. der zweiten Schaltstellung der Schaltkupplung, in einer definierten Ausgangsstellung, d. h. in einer für den Betrieb eines Rotationswerkzeuges bevorzugten Stellung, festgelegt sein. Dies erfolgt in der Weise, dass bei der nach innen geschobenen Position ein abgeflachter Teil 71 des Rotationskörpers 35 durch einen Durchtritt 69 des Führungskörpers 61 hindurch auf abgeflachte Endabschnitte 72 der Trägersäule 11 drückt und somit an der Trägersäule 11 gegen Drehung fixiert ist. Hierbei muss in der radial nach innen geschobenen Position des Rotationskörpers 35, d.h. der zweiten Schaltstellung der Schaltkupplung, der Rotationskörper 35 in einer definierten Ausgangsstellung, d.h. in einer für den Betrieb eines Rotationswerkzeuges bevorzugten Stellung, festgelegt sein. Bei solcher Gestaltung setzt das Überführen der Schaltkupplung in die zweite Schaltstellung die genaue Ausrichtung des Werkzeugantriebes, d.h. des Rotationskörpers 35, in eine definierte Drehstellung voraus. Es versteht sich, dass nicht dargestellte, dem Stand der Technik entsprechende Positionssensoren für die Steuerung solcher betrieblichen Funktionen vorhanden sind, sowohl hinsichtlich der Steuerung der Schaltfunktionen der Schaltkupplung als auch der Einstellung der Drehpositionen der Werkzeugscheibe 7.

## Patentansprüche

1. Werkzeugrevolver, mit einem an einer Werkzeugmaschine anzubringenden oder angebrachten Grundkörper (1), der eine Revolverachse (13) definiert, um die drehbar am Grundkörper (1) eine Werkzeugscheibe (7) gelagert ist, die mehrere an ihrem Umfang verteilte Werkzeugstationen (45) aufweist, die durch Drehen der Werkzeugscheibe (7) jeweils in mindestens eine Arbeitsposition einstellbar sind, in der ein im Inneren der Werkzeugscheibe (7) befindlicher Werkzeugantrieb (31, 35) mit seinem um eine zur Revolverachse (13) radiale Drehachse drehbaren, abtriebsseitigen Getriebeteil (35) mit einem werkzeugseitigen Kupplungsteil für den Antrieb mindestens eines Werkzeuges in Kupplungseingriff kommt, das sich an der auf die Arbeitsposition ausgerichteten Werkzeugstation (45) befindet, wobei das abtriebsseitige Getriebeteil (35) in der Werkzeugscheibe (7) um die Revolverachse (13) schwenkbar angeordnet ist, **dadurch gekennzeichnet, dass** in der Werkzeugscheibe (7) eine Schaltkupplung (47) vorhanden ist, die zwischen einer ersten Schaltstellung, in der das abtriebsseitige Getriebeteil (35) für eine Schwenkbewegung um die Revolverachse (13) mit der Werkzeugscheibe (7) verbunden ist, und einer zweiten Schaltstellung umschaltbar ist, in der das abtriebsseitige Getriebeteil (35) von der Werkzeugscheibe (7) entkuppelt ist.

2. Werkzeugrevolver nach Anspruch 1, **dadurch gekennzeichnet, dass** die Schaltkupplung als bewegbares Kupplungsteil eine Buchse (47) aufweist, die eine Drehlagerung des abtriebsseitigen Getriebeteils (35) für dessen Drehung um die radiale Drehachse bildet, zwischen erster Schaltstellung und zweiter Schaltstellung in der Werkzeugscheibe (7) radial verschiebbar angeordnet ist und in der ersten Schaltstellung eine radial vorgeschobene Stellung einnimmt, in der sie mit radial endseitigen Mitnehmern (63) mit Mitnehmerflächen (65) der Werkzeugscheibe (7) in Eingriff ist.

3. Werkzeugrevolver nach Anspruch 2, **dadurch gekennzeichnet, dass** das abtriebsseitige Getriebeteil (35) als weiterer Bestandteil der Schaltkupplung zusammen mit der Buchse (47) in der Werkzeugscheibe (7) radial verschiebbar ist und bei der zweiten Schaltstellung eine radial nach innen geschobene Position einnimmt, bei der es am Grundkörper (1) gegen eine Schwenkbewegung um die Revolverachse (13) gesichert ist.

4. Werkzeugrevolver nach Anspruch 3, **dadurch gekennzeichnet, dass** der Werkzeugantrieb in der Art eines Winkeltriebes mit einem antriebsseitigen, um die Revolverachse (13) drehbaren Kronenrad (31) mit in einer Radialebene liegender Verzahnung (43) gestaltet ist, deren radiale Erstreckung so gewählt ist, dass das abtriebsseitige Getriebeteil (35) mit seiner Verzahnung (41) bei den radialen Verschiebungen zwischen erster und zweiter Schaltstellung mit der Verzahnung (43) des Tellerrades (31) dauernd in Zahneingriff bleibt.

5. Werkzeugrevolver nach Anspruch 3 oder 4, **dadurch gekennzeichnet, dass** der Grundkörper (1) eine zentrale, die Revolverachse (13) definierende Trägersäule (11) aufweist, um die die Werkzeugscheibe (7) drehbar gelagert ist, und dass innerhalb derselben ein Führungskörper (55, 61) vorgesehen ist, an dem die beweglichen Komponenten der Schaltkupplung, wie Buchse (47) und darin gelagertes, abtriebsseitiges Getriebeteil (35), sowohl für die Radialbewegungen zwischen den Schaltstellungen als auch für die Schwenkbewegungen um die Revolverachse (13) geführt sind.

6. Werkzeugrevolver nach Anspruch 5, **dadurch gekennzeichnet, dass** bei der zweiten Schaltstellung ein abgeflachter Teil (71) des Rotationskörpers (35) durch einen Durchtritt (69) des Führungskörpers (61) hindurch auf abgeflachte Endabschnitte (72) der Trägersäule (11) drückt und **dadurch** den Führungskörper (61) in seiner Winkellage bezüglich der Revolverachse (13) festlegt.

7. Werkzeugrevolver nach einem der Ansprüche 1 bis 6, **dadurch gekennzeichnet, dass** die Schaltkupplung mit Hilfe eines Druckmediums, vorzugsweise mittels hydraulischer Betätigung, in die Schaltstellungen überführbar ist.

8. Werkzeugrevolver nach einem der Ansprüche 2 bis 7, **dadurch gekennzeichnet, dass** die Buchse (47) außenumfangsseitig einen vorstehenden Ringkörper (53) aufweist, der als bewegbarer Ringkolben dient, der Druckräume (57, 59) voneinander trennt, die am Führungskörper (61) in dem Führungsabschnitt (55) ausgebildet sind, an dem die Buchse (47) für die Verschiebebewegungen zwischen den Schaltstellungen geführt ist, und dass die Druckräume (57, 59) wahlweise mit dem Druckmedium versorgbar sind.

9. Werkzeugrevolver nach einem der Ansprüche 5 bis 8, **dadurch gekennzeichnet, dass** das antriebsseitige Kronenrad (31) des Werkzeugantriebes auf einer die Trägersäule (11) umgebenden Hohlwelle (25) angebracht ist.

10. Werkzeugrevolver nach einem der Ansprüche 1 bis 9, **dadurch gekennzeichnet, dass** als Antrieb für die Drehbewegungen der Werkzeugscheibe (7) um die Revolverachse (13) ein zu dieser koaxial angeordneter Torque-Motor (21) vorgesehen ist, dessen Außenläufer (19) mit der Werkzeugscheibe (7) für deren Direktantrieb verbunden ist.

11. Werkzeugrevolver nach Anspruch 9, **dadurch gekennzeichnet, dass** zwischen dem Grundkörper (1) und der Werkzeugscheibe (7) eine Klemmung (15) zum Festlegen der Drehposition der Werkzeugscheibe (7) vorhanden ist.

## Claims

1. A tool revolver comprising a base body (1) to be attached or attached to a machine tool and which defines a revolver axis (13), about which a tool disc (7) is rotatably mounted on the base body (1), which has a number of tool stations (45) distributed around its periphery and which, by rotating the tool disc (3), can be set in at least one working position respectively in which a tool drive (31,35) located in the interior of the tool disc (7) comes with its output side transmission part (35) rotatable about an axis of rotation radial to the revolver axis (13) into coupling engagement with a tool side coupling part for the drive of at least one tool which is located on the tool station (45) aligned to the working position, the output side transmission part (35) being disposed pivotably about the revolver axis (13) in the tool disc (7), **characterised in that** there is provided in the tool disc (7) a switch coupling (47) which can be switched between a first switching position, in which the output side transmission part (35) is connected to the tool disc (7) for a pivot movement about the revolver axis (13), and a second switching position in which the output side transmission part (35) is decoupled from the tool disc (7).

2. The tool revolver according to Claim 1, **characterised in that** the switch coupling has as a moveable coupling part a bushing (47) which forms a rotary mounting of the output side transmission part (35) for rotation of the latter about the radial axis of rotation, can be disposed such that it can be displaced radially between the first switching position and the second switching position in the tool disc (7), and in the first switching position adopts a radially pushed forward position in which it engages with radially end-side entrainers (63) with entrainer surfaces (65) of the tool disc (7).

3. The tool revolver according to Claim 2, **characterised in that** the output side transmission part (35), as a further component of the swittch coupling, together with the bushing (47) in the tool disc (7) is radially displaceable, and in the second switching position adopts a radially inwardly pushed position in which it is secured on the base body (1) from any pivot movement about the revolver axis (13).

4. The tool revolver according to Claim 3, **characterised in that** the tool drive is designed in the manner of an angle drive with a drive side crown wheel (31) rotatable about the revolver axis (13) and having teeth (43) lying in a radial plane, the radial extension of which is chosen so that the output side transmission part (35) with its teeth (41) remains continuously in tooth engagement with the teeth (43) of the crown wheel (31) during the radial displacements between the first and the second switching position.

5. The tool revolver according to Claim 3 or 4, **characterised in that** the base body (1) has a central support column (11) defining the revolver axis (13) about which the tool disc (7) is rotatably mounted, and that there is provided within the latter a guide element (55, 61) on which the moveable components of the switch coupling, such as the bushing (47) and the output side transmission part (35) mounted in the latter, are guided both for the radial movements between the switching positions and for the pivot movements about the revolver axis (13).

6. The tool revolver according to Claim 5, **characterised in that** in the second switching position a flattened part (71) of the rotation body (35) pushes through a passage (69) of the guide body (61) onto flattened end sections (72) of the support column (11), and in this way fixes the guide element (61) in its angular position in relation to the revolver axis (13).

7. The tool revolver according to any of Claims 1 to 6, **characterised in that** the switch coupling can be moved into the switching positions with the aid of a pressure medium, preferably by means of hydraulic operation.

8. The tool revolver according to any of Claims 2 to 7, **characterised in that** the bushing (47) has on the outer circumference side a projecting ring element (53) which serves as a moveable ring piston which separates from one another pressure chambers (57, 59) which are formed on the guide element (61) in the guide section (55) and on which the bushing (47) is guided for displacement movements between the switching positions, and that the pressure chambers (57, 59) can optionally be supplied with the pressure medium.

9. The tool revolver according to any of Claims 5 to 8, **characterised in that** the drive side crown wheel (31) of the tool drive is attached to a hollow shaft (25) surrounding the support column (11).

10. The tool revolver according to any of Claims 1 to 9, **characterised in that** there is provided as a drive for the rotary movements of the tool disc (7) about the revolver axis (13) a torque motor (21) disposed coaxially to the latter, the external rotor (19) of which is connected to the tool disc (7) for the direct drive of the latter.

11. The tool revolver according to Claim 9, **characterised in that** there is provided between the base body (1) and the tool disc (7) a clamp (15) for fixing the rotary position of the tool disc (7).

## Revendications

1. Révolver d'outil, comprenant un corps (1) de base à mettre ou mis sur une machine-outil, et définissant un axe (13) de révolver autour duquel est monté tournant sur le corps (1) de base un disque (7) d'outil, qui a plusieurs postes (45) d'outil répartis sur son pourtour et pouvant être mis, par rotation du disque (7) d'outil, respectivement dans une au moins une position de travail, dans laquelle un entraînement (31, 35) d'outil se trouvant à l'intérieur du disque (7) d'outil vient en prise par sa partie (35) de transmission, se trouvant du côté de la sortie et pouvant tourner autour d'un axe de rotation radial par rapport à l'axe (13) du révolver, avec une partie d'accouplement qui se trouve du côté de l'outil, pour l'entraînement d'au moins un outil, qui se trouve sur le poste (45) d'outil dirigé sur la position de travail, la partie (35) d'entraînement du côté de la sortie étant montée pivotante autour de l'axe (13) du révolver dans le disque (7) d'outil, **caractérisé en ce que** dans le disque (7) d'outil il y a un embrayage (47) qui peut passer entre une première position d'embrayage, dans laquelle la partie (35) de transmission du côté de la sortie est reliée au disque (7) d'outil pour un mouvement de pivotement autour de l'axe (13) du révolver et une deuxième position d'embrayage, dans laquelle la partie (35) de transmission du côté de la sortie est découplée du disque (7) d'outil.

2. Révolver d'outil suivant la revendication 1, **caractérisé en ce que** l'embrayage comporte, comme partie d'accouplement mobile, une douille (47) qui forme un palier de rotation de la partie (35) de transmission du côté de la sortie pour sa rotation autour de l'axe de rotation radial, qui est montée coulissante radialement entre une première position d'embrayage et une deuxième position d'embrayage dans le disque (7) d'outil et qui prend, dans la première position d'embrayage, une position décalée radialement vers l'avant, dans laquelle elle est en prise par des entraîneurs (63) d'extrémité du côté radial avec des surfaces (65) d'entraîneurs du disque (7) d'outil.

3. Révolver d'outil suivant la revendication 2, **caractérisé en ce que** la partie (35) de transmission du côté de la sortie est, en tant qu'autre partie constituante de l'embrayage, coulissante radialement ensemble avec la douille (47) dans le disque (87) d'outil et prend, dans la deuxième position de transmission, une position décalée radialement vers l'intérieur, dans laquelle elle est bloquée sur le corps (1) de base en étant empêchée d'avoir un mouvement de pivotement autour de l'axe (13) du révolver.

4. Révolver d'outil suivant la revendication 3, **caractérisé en ce que** l'entraînement d'outil est conformé à la manière d'un entraînement par engrenage d'angle, ayant une roue (31) à couronne du côté entraînement, pouvant tourner autour de l'axe (13) du révolver, ayant une denture (43) se trouve dans un plan radial dont l'étendue radiale est choisie de manière à ce que la partie (35) de transmission du côté de la sortie reste en permanence en prise par sa denture (41) lors des déplacements radiaux entre la première et la deuxième position de transmission avec la denture (43) de la roue (31) couronne.

5. Révolver d'outil suivant l'une des revendications 3 ou 4, **caractérisé en ce que** le corps (1) de base a une colonne (11) de support centrale, définissant l'axe (13) du révolver, colonne autour de laquelle le disque (7) d'outil est monté tournant et **en ce que** à l'intérieur de celle-ci est prévu un corps (55, 61) de guidage, sur lequel les éléments mobiles de l'embrayage, comme la douille (47) et la partie (35) de transmission du côté de la sortie qui y est montée, sont guidés tant pour les mouvements dans la direction radiale entre les positions d'embrayage que pour les mouvements de pivotement autour de l'axe (13) du révolver.

6. Révolver d'outil suivant la revendication 5, **caractérisé en ce que**, dans la deuxième position de transmission une partie (71) aplatie du corps (35) de rotation repousse, en passant par une traversée (69) du corps (61) de guidage, des segments (72) d'extrémité aplatis de la colonne (11) de support et fixe ainsi le corps (61) de guidage dans sa position angulaire par rapport à l'axe (13) du révolver.

7. Révolver d'outil suivant l'une des revendications 1 à 6, **caractérisé en ce que** l'embrayage peut être mis dans les positions d'embrayage à l'aide d'un fluide sous pression, de préférence au moyen d'un actionnement hydraulique.

8. Révolver d'outil suivant l'une des revendications 2 à 7, **caractérisé en ce que** la douille (47) a, du côté de la périphérie extérieure, un corps (53) annulaire en saillie, qui sert de piston annulaire mobile, qui sépare l'une de l'autre des chambres (57, 59) de pression, lesquelles sont constituées sur le corps (61) de guidage dans le segment (55) de guidage où la douille (47) est, pour les mouvements de coulissement, guidée entre les positions d'embrayage, et **en ce que** les chambres (57, 59) de pression peuvent être alimentées au choix en le fluide sous pression.

9. Révolver d'outil suivant l'une des revendications 5 à 8, **caractérisé en ce que** la roue (31) couronne, du côté entraînement, de l'entraînement d'outil est montée sur un arbre (25) creux entourant la colonne (11) de support.

10. Révolver d'outil suivant l'une des revendications 1 à 9, **caractérisé en ce qu'**il est prévu, comme entraînement pour le mouvement de rotation du disque (7) d'outil autour de l'axe (13) de révolver, un moteur (21) à couple, disposé coaxialement à l'axe (13), et dont le rotor (19) extérieur est relié au disque (7) d'outil pour son entraînement direct.

11. Révolver d'outil suivant la revendication 9, **caractérisé en ce qu'**il y a entre le corps (1) de base et le disque (7) d'outil un serrage (15) pour fixer la position en rotation du disque (7) d'outil.
